(19) **Europäisches Patentamt European Patent Office Office européen des brevets**

(11) **EP 2 188 605 B1**

(12) **FASCICULE DE BREVET EUROPEEN**

(45) Date de publication et mention de la délivrance du brevet:
**23.02.2011 Bulletin 2011/08**

(21) Numéro de dépôt: **08803867.4**

(22) Date de dépôt: **09.09.2008**

(51) Int Cl.:
**G01J 5/22** (2006.01)

(86) Numéro de dépôt international:
**PCT/EP2008/061899**

(87) Numéro de publication internationale:
**WO 2009/034066 (19.03.2009 Gazette 2009/12)**

(54) **BOLOMETRE A ASSERVISSEMENT DE CHALEUR**

BOLOMETER MIT WÄRMERÜCKMELDUNG

BOLOMETER WITH HEAT FEEDBACK

(84) Etats contractants désignés:
**AT BE BG CH CY CZ DE DK EE ES FI FR GB GR HR HU IE IS IT LI LT LU LV MC MT NL NO PL PT RO SE SI SK TR**

(30) Priorité: **10.09.2007 FR 0706329**

(43) Date de publication de la demande:
**26.05.2010 Bulletin 2010/21**

(73) Titulaire: **Centre National de la Recherche Scientifique (CNRS) 75016 Paris (FR)**

(72) Inventeurs:
- **DENOUAL, Matthieu F-14000 Caen (FR)**
- **ROBBES, Didier F-14780 Lantheuil (FR)**
- **DELAUNAY, Sébastien F-14210 Amaye Sur Orne (FR)**

(74) Mandataire: **Roussel, Eric Marcel Henri et al Cabinet Régimbeau, Espace Performance, Bâtiment K 35769 Saint-Grégoire (FR)**

(56) Documents cités:
**GB-A- 2 207 501**

- **C. D. REINTSEMA., J. A. KOCH, E. N. GROSSMAN: REVIEW OF SCIENTIFIC INSTRUMENTS, vol. 69, no. 1, 1998, pages 152-163, XP002484881**
- **G. ALLÈGRE, B, GUILLET, D. ROBBES, L. MÉCHIN ET AL.: "A room temperature Si3N4/SiO2 membrane-type electrical substitution radiometer using thin film platinum thermometers" MEASUREMENT SCIENCE AND TECHNOLOGY, 30 octobre 2006 (2006-10-30), XP002484882**

**Description**

L'invention concerne un bolomètre pour la mesure de l'intensité ou de la présence d'un rayonnement incident.

Un domaine d'application de l'invention est les capteurs de rayonnements, utilisés par exemple en imagerie infrarouge ou en thermographie infrarouge à température ambiante.

Un bolomètre comprend conventionnellement une résistance variable en fonction de la température et un corps absorbant le rayonnement incident ou un autre signal externe. La mesure de la variation de cette résistance permet une mesure de cette température, qui permet elle-même de remonter à la variation du signal externe incident.

Ce type de capteur peut être appliqué à la radiométrie, les rayonnements alors absorbés à la surface du bolomètre échauffent le bolomètre et, dans ce cas, la mesure de la température du bolomètre donne une mesure indirecte de la puissance reçue.

Le principe de fonctionnement des bolomètres repose sur des phénomènes thermiques par essence relativement lents, même si l'on envisage la miniaturisation qui permet de diminuer les constantes de temps.

Les propriétés thermiques du système sont liées à la conductance thermique entre l'élément de mesure et un thermostat, ainsi qu'à la capacité thermique de l'élément soumis au rayonnement. Ces paramètres définissent le temps de réponse du système.

L'amélioration des performances des bolomètres est un point-clef pour accroître la sensibilité et les temps de réponse des applications visées. Ces améliorations de performances peuvent être obtenues par bouclage du système grâce à l'asservissement de la chaleur.

Le document « A room temperature Si3N4/SiO2 membrane-type electrical substitution radiometer using thin film paltinum thermometers », G Allègre, B Guillet, D Robbes, L Méchin, S Lebargy, S Nicoletti, Institute of Physics Publishing, Measurement Science and Technology, 17(2006) 1-7, décrit le principe d'asservissement par substitution électrique de chaleur. En l'absence de lumière incidente, la température de la membrane constituant le récepteur absorbant est maintenue constante à une valeur $T_{ref}$ en utilisant un dispositif de chauffage résistif et un dispositif de contrôle de température. En présence de lumière, la puissance nécessaire pour maintenir la membrane à la température $T_{ref}$ est fournie par le dispositif de chauffage résistif et la lumière incidente découpée. La puissance incidente sur le récepteur absorbant peut être estimée en mesurant la puissance électrique équivalente nécessaire pour obtenir la même montée en température en utilisant l'un ou l'autre des deux procédés de chauffage.

Ce dispositif connu à contre-réaction de chaleur présente l'inconvénient d'un volume occupé important, ce qui joue au détriment de l'intégration et de la miniaturisation du système. Cet inconvénient est critique dans le cas d'applications à forte intégration comme par exemple les matrices de pixels pouvant servir à la constitution de caméras à vision nocturne. Un autre inconvénient est le retard entre le dépôt de chaleur et la mesure de température, ce qui limite les performances du système en boucle fermée (marge de gain et marge de phase).

D'autres exemples de l'etat de technique sont fournis par le document GB 2 207 501 et par l'article "High precision electrical substitution radiometer based on superconducting-resistive-transition edge thermometry" de Reintsema et al., 1997.

L'invention vise à obtenir un bolomètre palliant les inconvénients de l'état de la technique, et améliorant les performances de l'asservissement.

A cet effet, un premier objet de l'invention est un bolomètre, comportant une surface extérieure d'absorption thermique d'un rayonnement incident, la surface d'absorption étant en contact thermique avec au moins un élément de mesure du rayonnement incident, ayant une résistance électrique de mesure, variable en fonction de la température, l'élément de mesure se trouvant dans une boucle d'asservissement de chaleur comportant un correcteur d'application d'une puissance de chauffage à un moyen résistif de chauffage pour maintenir la température de la résistance électrique de mesure égale à une température de consigne, caractérisé en ce que le moyen résistif de chauffage comprend l'élément de mesure, le correcteur est prévu pour générer une composante fréquentielle de la puissance de chauffage, qui est appliquée à un premier moyen de couplage prévu entre l'élément de mesure et le correcteur pour appliquer à l'élément de mesure un signal sans composante continue, un deuxième moyen de couplage, distinct du premier moyen de couplage, est prévu entre l'élément de mesure et un moyen de polarisation continue pour maintenir la résistance électrique de mesure à un point de fonctionnement continu prescrit.

Suivant d'autres caractéristiques de l'invention,

- Le moyen résistif de chauffage est formé par l'élément de mesure.
- Le premier moyen de couplage est capacitif.
- La boucle d'asservissement de chaleur et le moyen de polarisation continue sont prévus pour modifier la puissance dissipée dans la résistance de mesure sans changer son point de fonctionnement.
- Le premier moyen de couplage applique à l'élément de mesure un signal dans une bande de fréquence supérieure à 20 kHz.
- La boucle d'asservissement de chaleur comporte un moyen pour former un signal d'erreur entre le signal présent dans l'élément de mesure et un signal correspondant de consigne constante prescrite, le correcteur étant prévu pour appliquer à l'élément de mesure par l'intermédiaire du premier moyen de couplage un signal alternatif fonction du signal d'erreur.

- Le correcteur est prévu pour appliquer à l'élément de mesure par l'intermédiaire du premier moyen de couplage un signal alternatif modulé en amplitude par le signal d'erreur.
- Le correcteur est prévu pour appliquer à l'élément de mesure par l'intermédiaire du premier moyen de couplage un premier signal sinusoïdal modulé en amplitude par le signal d'erreur.
- Le correcteur comporte un moyen de linéarisation de la composante fréquentielle de la puissance de chauffage en fonction du signal d'erreur.
- Le moyen de linéarisation du correcteur comporte un moyen de modulation en largeur d'impulsions du signal d'erreur pour former un signal intermédiaire et un moyen de modulation du signal intermédiaire par un deuxième signal sinusoïdal pour former un premier signal sinusoïdal appliqué à l'élément de mesure par l'intermédiaire au moins du premier moyen de couplage.
- Le correcteur comporte un moyen de conversion analogique - numérique pour la conversion du signal analogique d'erreur en un signal numérique, le moyen de modulation en largeur d'impulsions du signal d'erreur comporte un correcteur de type proportionnel et intégral du signal numérique pour former le signal intermédiaire.
- Le moyen de linéarisation du correcteur comporte un moyen de formation de la racine carrée du signal d'erreur ou d'un signal proportionnel au signal d'erreur pour former un signal intermédiaire et un moyen de modulation du signal intermédiaire par un signal sinusoïdal pour former le signal alternatif.
- Le moyen de formation du signal d'erreur est numérique.
- La résistance de mesure est par exemple constituée en manganite.

L'invention sera mieux comprise à la lecture de la description qui va suivre, donnée uniquement à titre d'exemple non limitatif en référence aux dessins annexés, sur lesquels :

- la figure 1 est un schéma du principe thermique du bolomètre suivant l'invention,
- la figure 2 est un schéma électrique de principe du bolomètre suivant l'invention, dans un premier mode de réalisation,
- la figure 3 représente des chronogrammes de signaux mesurés sur un bolomètre suivant le premier mode de réalisation, ,
- la figure 4 est un schéma électrique de principe du bolomètre suivant l'invention, dans un deuxième mode de réalisation,
- la figure 5 est un schéma électrique de principe du bolomètre suivant l'invention, dans un troisième mode de réalisation,
- la figure 6 est un schéma électrique de principe du bolomètre suivant l'invention, dans une variante du troisième mode de réalisation..

Aux figures, le bolomètre 1 comporte une surface 2 en un matériau d'absorption d'un rayonnement incident de puissance $P_{INC}$ à mesurer, pouvant être par exemple infrarouge. La surface 2 se trouve sur au moins un élément 3 de mesure, ayant une résistance R variable suivant la température selon une fonction connue, dépendant notamment du matériau constitutif de l'élément 3, ainsi que cela est connu par l'homme du métier. La résistance R peut être par exemple en manganite ou oxydes de manganèse, qui présentent de fortes variations de résistance, en or ou en aluminium. L'élément 3 de mesure est prévu sur un substrat 100 et possède une conductance thermique $G_{th}$ déterminée avec un thermostat 101 maintenu à une température déterminée T0. Le rayonnement incident $P_{INC}$ est envoyé à la surface 2 vers l'élément 3 par exemple par l'intermédiaire d'un dispositif 200 de hachage (en anglais : chopper), ainsi que cela est connu. Le signal rayonné incident possède une pulsation $\Omega$ dont la valeur a été déterminée à l'avance. Bien entendu, le rayonnement incident peut ne pas être découpé. La pulsation $\Omega$ est liée au dispositif 200 de hachage s'il est utilisé et/ou aux variations dans le temps du signal incident.

Dans le mode de réalisation représenté aux figures, l'élément 3 de mesure est par exemple purement résistif.

En outre, un seul élément 3 de mesure est par exemple prévu. Bien entendu, une pluralité d'éléments 3 de mesure pourrait être prévue, comme par exemple dans le cas de matrices d'éléments de mesure.

Suivant l'invention, la résistance R de mesure sert à la fois à la mesure de la grandeur température et à l'asservissement de la grandeur chaleur.

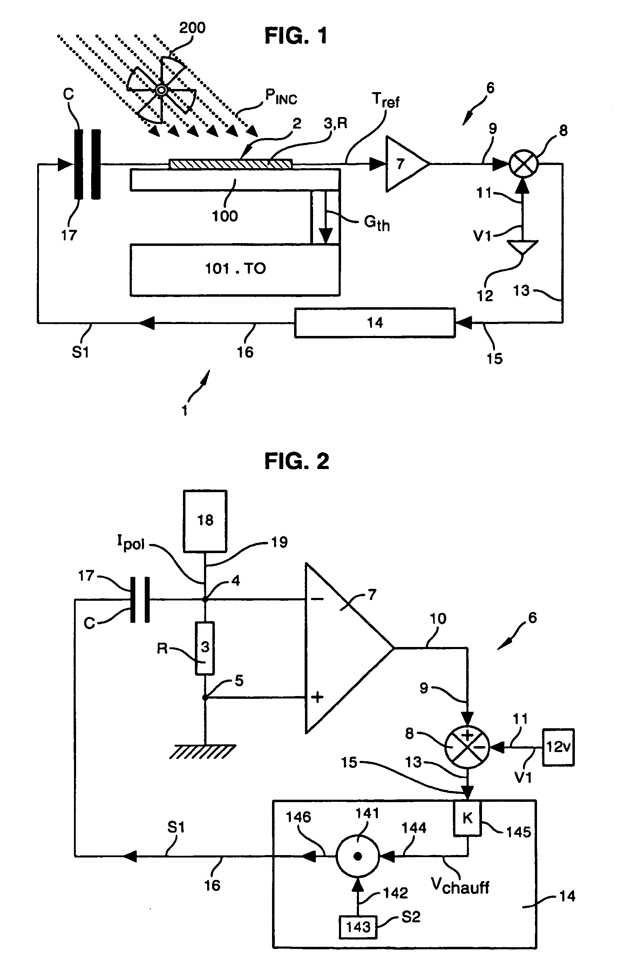

Dans un premier mode réalisation représenté aux figures 1 à 3, l'élément 3 de mesure est relié par ses deux première et deuxièmes bornes 4, 5 à une boucle 6 d'asservissement de chaleur pour maintenir la température de l'élément 3 de mesure égale à une température $T_{ref}$ de consigne. La boucle 6 comporte : un dispositif 7 d'amplification de la tension aux bornes de l'élément 3, un élément soustracteur 8 comportant une première entrée 9 reliée à la sortie 10 de tension du dispositif 7 d'amplification et une deuxième entrée 11 reliée à un module 12 imposant une tension V1 de consigne constante prescrite, pour former sur une sortie 13 du soustracteur 8 la différence $V_{chauff}$ ou signal d'erreur entre les deux entrées 9, 11. La sortie 13 du soustracteur 8 est reliée à l'entrée 15 d'un module correcteur 14 appliquant par sa sortie 16 un signal alternatif S1 fonction du signal présent sur son entrée 15. La sortie 16 est reliée par un premier moyen 17 de couplage à l'élément 3 de mesure.

Un module 18, distinct de la boucle 6 d'asservissement de chaleur, est prévu pour imposer une polarisation prescrite $I_{pol}$ du point de fonctionnement de l'élément 3 de mesure en courant continu par l'intermédiaire d'un deuxième moyen 19 de couplage, tandis que le premier moyen 17 de couplage applique à l'élément 3 de mesure une composante fréquentielle S1 à moyenne nulle. Par exemple, à la figure 2, les moyens 17, 19 de couplage sont reliés à un même noeud formé par la première borne 4 de l'élément 3, dont la deuxième borne 5 est reliée à la masse.

Le signal S1 fréquentiel sert au chauffage de la résistance R de l'élément 3 de mesure. Ainsi, le ou les éléments résistifs de chauffage de la boucle 6 comprennent l'élément 3 de mesure.

La contre-réaction de chaleur par le signal S1 de chauffage asservit la température de la résistance R de mesure à la température $T_{ref}$, sans en modifier le point de fonctionnement lié au courant $I_{pol}$ de polarisation la traversant.

Dans un mode de réalisation, le ou les éléments résistifs de chauffage de la boucle 6 ne comprennent que l'élément 3 de mesure.

Dans le mode de réalisation représenté aux figures, le premier moyen 17 de couplage est capacitif et comprend un ou plusieurs condensateurs formant une capacité C de valeur déterminée. Le deuxième moyen 19 de couplage est formé par de simples conducteurs électriques.

Le signal S1 de chauffage est par exemple un signal haute fréquence, dans une bande de fréquence supérieure à 20 kHz.

Dans un mode de réalisation, le correcteur 14 forme un premier signal S1 de chauffage, qui est sinusoïdal et par exemple proportionnel au signal sur l'entrée 15. Le signal S1 de chauffage est par exemple formé par modulation d'amplitude du signal de différence $V_{chauff}$ par un deuxième signal sinusoïdal S2 ayant ladite fréquence. Le correcteur 14 comprend par exemple à cet effet un multiplicateur 141 comportant une première entrée 142 reliée à un module 143 de fourniture du deuxième signal sinusoïdal $\sin(\omega.t)$, une deuxième entrée 144 reliée à l'entrée 15, par exemple par l'intermédiaire d'un module 145 apportant un facteur multiplicatif K constant prescrit, et une sortie 146 reliée à la sortie 16. Les éléments 141, 143 forment un moyen de modulation du signal intermédiaire sur l'entrée 144 par le signal sinusoïdal S2 pour former le signal alternatif S1.

On a par exemple :

$$S1 = V_{chauff}.\ \sin(\omega.t)$$

avec

$V_{chauff}$ le signal présent sur l'entrée 144,
t le temps,
$\omega$ une pulsation prescrite.

Le courant traversant la résistance R de mesure est alors :

$$i(t) = I_{pol} + (V_{chauff}\ /\ R).\sin(\omega.t)$$

La valeur moyenne de i(t) est égale à $I_{pol}$.
La puissance p(t) dans la résistance R de mesure est alors :

$$p(t) = R.\{\ I_{pol}{}^2 + 2.I_{pol}.(V_{chauff}\ /\ R).\sin(\omega.t) + ((V_{chauff}\ /\ R).\sin(\omega.t))^2\}$$

et a une valeur moyenne

$$\overline{p}(t) = R.I_{pol}{}^2 + \frac{1}{2}\frac{V_{chauff}{}^2}{R}$$

La résistance de mesure R est égale à

$$R = R_{mes\,0}\left[1 + \gamma\left(T - T_0\right)\right]$$

avec

$$\gamma = \frac{\alpha}{1 - \alpha\left(T - T_0\right)} \text{ et } \alpha \equiv \frac{1}{R}\frac{dR}{dT}$$

$$S = \frac{V_s}{P_{INC}} = \frac{\alpha\eta I_{pol}R}{\left(G_{th}{}^2 + \Omega^2 C_{th}{}^2\right)^{\frac{1}{2}}}$$

S : sensibilité,
$V_s$ : tension de sortie du bolomètre entre les bornes 4, 5 de la résistance R de mesure,
$P_{INC}$ : puissance rayonnée à mesurer,
$\alpha$ : TCR coefficient de résistance en température,
$\eta$ : facteur d'absorption de la couche absorbante 2,
$I_{pol}$: courant de polarisation,
R : résistance de mesure du bolomètre,
$G_{th}$ : conductivité thermique entre la résistance de mesure du bolomètre et son environnement vers le thermostat 101 à T0,
$\Omega$ : pulsation du signal rayonné incident,
$C_{th}$ : capacité thermique.

On peut donc faire évoluer la puissance dissipée dans la résistance R de mesure, et par conséquent sa température, sans changer son point de fonctionnement, étant donné que le courant moyen traversant la résistance de mesure reste constant à Ipol.

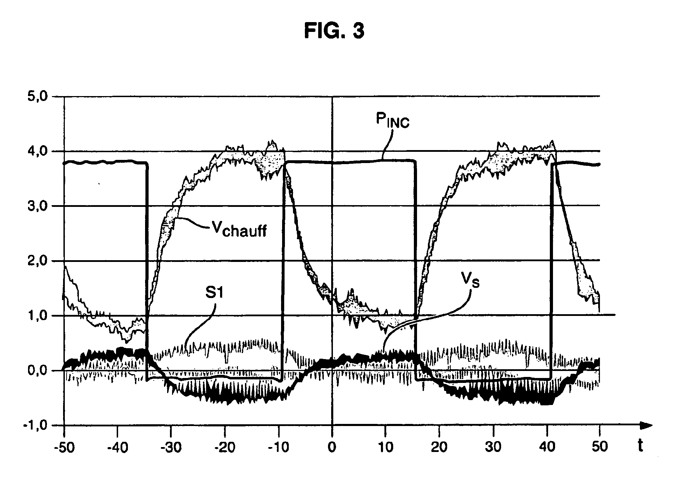

La figure 3 montre, en fonction du temps t en seconde en abscisse, différentes mesures de tension en Volt, réalisées sur un bolomètre sur membrane de verre et résistance R métallique. Le signal PINC en créneau correspond à l'application d'une puissance incidente. A cette stimulation thermique, le système bouclé répond par un signal de retour $V_{chauff}$, qui est appliqué à la résistance de mesure par couplage capacitif par l'intermédiaire du signal V1 correspondant à une porteuse haute fréquence modulée en amplitude par le signal d'enveloppe $V_{chauff}$.

L'invention permet ainsi l'asservissement en chaleur tout en présentant une simplification du procédé de fabrication, une possibilité d'intégration plus élevée et une amélioration des performances de l'asservissement, dont notamment une réduction de la constante de temps, un accroissement de la sensibilité, du fait de la proximité ultime entre les résistances de mesure et de chauffage, qui sont confondues, et finalement une meilleure immunité aux variations du TCR (coefficient de variation de la résistance en fonction de la température) lié au vieillissement.

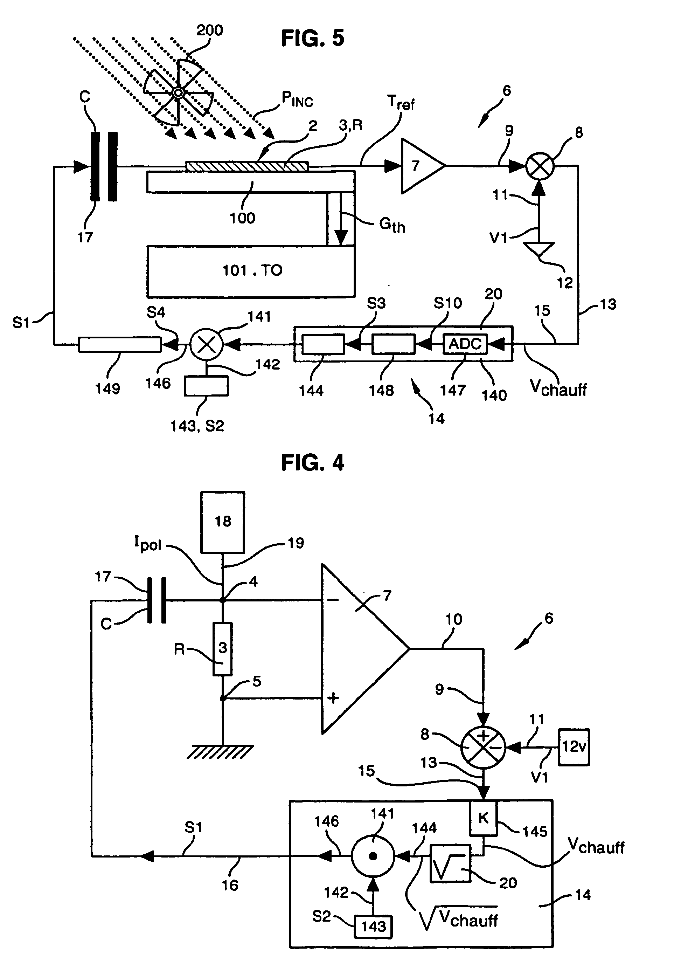

Dans un deuxième mode de réalisation conforme au premier mode de réalisation des figures 1 à 3, il y a en plus un moyen 20 permettant de linéariser la puissance du signal S1 en fonction du signal de différence $V_{chauff}$ ou du signal de température mesuré par l'élément 2. A la figure 4, ce moyen 20 de linéarisation a par exemple la forme d'un module de formation de racine carrée disposé en amont du multiplicateur 141 de modulation d'amplitude et en aval de l'entrée 15, par exemple entre le module 145 et le multiplicateur 141 (ou en variante entre le module 145 et l'entrée 15).

Le module 20 forme ainsi sur l'entrée 144 un signal proportionnel à $\sqrt{V_{chauff}}$ . La puissance P(S1) du signal S1 appliqué par le moyen 17 à l'élément 2 est alors proportionnelle au signal de différence $V_{chauff}$.

Dans le troisième mode de réalisation représenté à la figure 5, le moyen 20 de linéarisation de la puissance du signal S1 en fonction du signal de différence $V_{chauff}$ possède une autre forme. Le signal de différence $V_{chauff}$ est numérisé dans le correcteur numérique 14. Le signal de différence peut également être formé dans le contrôleur par numérisation du signal 9 et calcul de la différence avec une valeur mémorisée dans le contrôleur. Ce correcteur 14 est mis en oeuvre par un microcontrôleur 140, un microprocesseur, un microordinateur, ou autres. A cet effet, le signal de différence $V_{chauff}$ est envoyé dans le correcteur 14 à un convertisseur 147 analogique - numérique fournissant à partir du signal de différence $V_{chauff}$ analogique présent sur l'entrée 15 du correcteur 14 un signal numérique S10. Ce signal numérique S10 est modulé en largeur d'impulsion (PWM pour pulse width modulation en anglais) par un module 148 de modulation de largeur d'impulsion, comportant par exemple un contrôleur proportionnel et intégral PI pour appliquer une correction proportionnelle et intégrale au signal S10, pour former un troisième signal S3 intermédiaire, dit signal de rétroaction de chauffage. Le rapport cyclique β du troisième signal S3 intermédiaire modulé en largeur d'impulsion est égal, exprimé en %, à

$$\beta = 100.t_{ON}/T$$

où

$t_{ON}$ est le temps pendant lequel le signal S3 se trouve à un premier niveau, par exemple le niveau haut 1,
T est la période prescrite et constante du signal S3,
$t_{OFF} = T - t_{ON}$ est le temps pendant lequel le signal S3 se trouve à un deuxième niveau différent du premier niveau, ce deuxième niveau étant par exemple le niveau bas. La valeur moyenne du troisième signal S3 intermédiaire modulé en largeur d'impulsion est égale à la valeur du signal en sortie du contrôleur.

Le correcteur 14 fournit sur sa sortie 144 le troisième signal S3 intermédiaire. La sortie 144 est reliée au multiplicateur 141 pour effectuer la modulation d'amplitude du troisième signal intermédiaire S3 par le deuxième signal sinusoïdal S2 de porteuse du module 143, afin de fournir sur la sortie 146 un quatrième signal S4 sinusoïdal pour un seul des premier et deuxième niveau de S3, par exemple pour le premier niveau correspondant à $t_{ON}$ et un signal constant, par exemple nul, pour l'autre niveau de S3, par exemple pour le deuxième niveau correspondant à $t_{OFF}$.

Le quatrième signal S4 est ensuite envoyé au moyen 17 de couplage pour former le signal S1 fréquentiel par exemple par l'intermédiaire d'un filtre passe-bande 149 autour de la fréquence de la porteuse S2.

La valeur numérique calculée par le contrôleur proportionnel et intégral en fonction du signal S10 est égale à la valeur moyenne du signal S3, c'est-à-dire égale à β. Vmax.

avec Vmax la tension maximale à la sortie du composant numérique pour un rapport cyclique β de 100%.

$$S2 = K_{ampl}.\sin(\omega.t)$$

$$S4 = K_{mult}.S3.S2 = K_{mult}.K_{ampl}.\sin(\omega.t).S3$$

avec $K_{ampl}$ une constante et $K_{mult}$ une constante liée au multiplicateur. La valeur efficace du signal S4 est

$$V_{RMS}(S4) = \sqrt{\frac{1}{T}\int_0^T (\mathrm{K_{mult}} \cdot S3 \cdot S2)^2 dt}$$

soit

$$V_{RMS}(S4) = \sqrt{\frac{1}{T}\int_0^{\beta T} (\mathrm{K}^2{}_{\mathrm{mult}} \cdot V^2{}_{\max} \cdot S2)^2 dt}$$

$$V_{RMS}(S4) = \sqrt{\frac{\beta}{2}\mathrm{K}^2{}_{\mathrm{mult}} \cdot V^2{}_{\max} \cdot K^2{}_{ampl}}$$

$$V_{RMS}(S4) \propto \sqrt{\beta}$$

$$P(S1) = \frac{V^2{}_{RMS}(S4)}{R_{mes}} \propto \beta \propto S3 \propto V_{chauff}$$

où P(S1) est la puissance du signal S1 et le signe $\propto$ signifie la proportionnalité.

La puissance de contre-réaction appliquée sur la résistance de mesure est donc directement proportionnelle à la valeur calculée à la sortie du contrôleur 158. Le système est alors entièrement linéaire. On n'a plus besoin de faire d'hypothèse pour la linéarisation et le calcul des correcteurs.

La modulation par largeur d'impulsion permet ainsi une linéarisation de la puissance du signal S1 en fonction du signal de différence V$_{chauff}$. Le système est aussi d'une plus grande simplicité d'utilisation. Le passage boucle ouverte - boucle fermée peut être mieux contrôlé. La mise en place du contrôleur et donc des performances en boucle fermée est plus simple. La linéarisation pourrait bien sûr être mise en oeuvre comme en analogique par l'utilisation d'une fonction racine carrée numérique, mais l'utilisation d'une modulation par largeur d'impulsion PWM permet directement la linéarisation sans fonction complémentaire ou autre calcul.

Bien entendu, dans les modes de réalisation décrits ci-dessus, la modulation d'amplitude peut être faite avec un multiplieur 141 ou un simple interrupteur, par exemple à transistor(s).

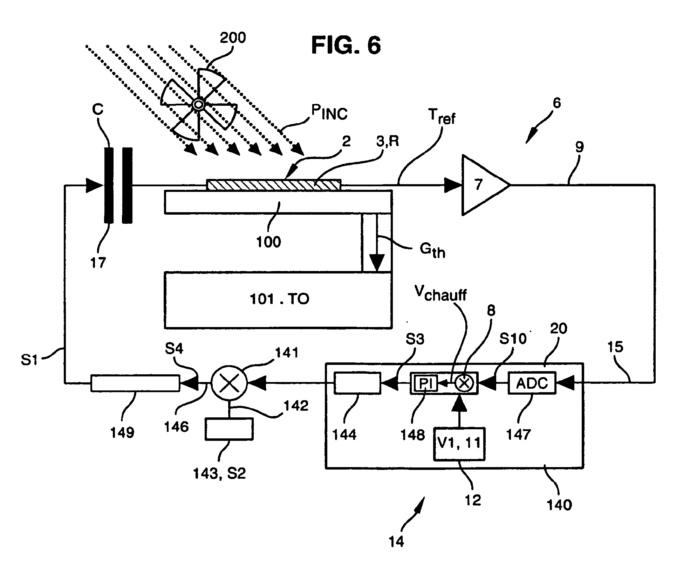

La figure 6 est une variante de la figure 5, où le signal de différence V$_{chauff}$ est numérique et est formé après conversion du signal analogique de température présent sur la sortie 9 en un signal numérique dans le convertisseur analogique-numérique 147, la sortie 9 étant reliée directement à l'entrée 15. Les éléments 8, 11 et 15 sont numériques pour former la différence numérique V$_{chauff}$ entre la sortie 9 numérisée à la sortie S10 du convertisseur 147 et le signal V1 numérique constant fourni par un module numérique 12. Le signal de différence numérique V$_{chauff}$ est envoyé au module 148. La valeur numérique V1 constante est une valeur de consigne préenregistrée dans une mémoire 12 du microcontrôleur ou autres.

7

L'invention peut être mise en oeuvre dans toutes les applications de technique de substitution de chaleur. Le domaine d'application principal envisagé est celui de la bolométrie à température ambiante. L'invention peut être appliquée aux caméras infrarouges, aux matrices de pixels et à tous dispositifs de visualisation d'imagerie infrarouge, notamment dans l'infrarouge lointain (fréquence de l'ordre du Térahertz). Une application typique de ce domaine est la thermographie infrarouge pour les dispositifs de vision nocturne ou de vision augmentée. L'invention trouve des applications dans le domaine militaire et le domaine civil. Une application civile est, dans le cadre des réglementations sur la sécurité routière, les assistants à la conduite, où la thermographie infrarouge est un des concepts en développement pour l'amélioration de la sécurité, pour l'aide à la vision nocturne et le repérage de corps chauds vivants pour la prévention d'impacts.

## Revendications

1. Bolomètre, comportant une surface extérieure (2) d'absorption thermique d'un rayonnement incident, la surface d'absorption étant en contact thermique avec au moins un élément (3) de mesure du rayonnement incident, ayant une résistance électrique (R) de mesure, variable en fonction de la température, l'élément (3) de mesure se trouvant dans une boucle (6) d'asservissement de chaleur comportant un correcteur (14) d'application d'une puissance de chauffage à un moyen résistif de chauffage pour maintenir la température de la résistance électrique de mesure égale à une température (Tref) de consigne, **caractérisé en ce que** le moyen résistif de chauffage comprend l'élément (3) de mesure, le correcteur (14) est prévu pour générer une composante fréquentielle (S1) de la puissance de chauffage, qui est appliquée à un premier moyen (17) de couplage prévu entre l'élément (3) de mesure et le correcteur (14) pour appliquer à l'élément (3) de mesure un signal sans composante continue, un deuxième moyen (19) de couplage, distinct du premier moyen (19) de couplage, est prévu entre l'élément (3) de mesure et un moyen (18) de polarisation continue pour maintenir la résistance électrique de mesure à un point de fonctionnement continu prescrit.

2. Bolomètre suivant la revendication 1, **caractérisé en ce que** le moyen résistif de chauffage est formé par l'élément (3) de mesure.

3. Bolomètre suivant l'une quelconque des revendications précédentes, **caractérisé en ce que** le premier moyen (17) de couplage est capacitif.

4. Bolomètre suivant l'une quelconque des revendications précédentes, **caractérisé en ce que** la boucle (6) d'asservissement de chaleur et le moyen (18) de polarisation continue sont prévus pour modifier la puissance dissipée dans la résistance (R) de mesure sans changer son point de fonctionnement.

5. Bolomètre suivant l'une quelconque des revendications précédentes, **caractérisé en ce que** le premier moyen (17) de couplage applique à l'élément (3) de mesure un signal dans une bande de fréquence supérieure à 20 kHz.

6. Bolomètre suivant l'une quelconque des revendications précédentes, **caractérisé en ce que** la boucle (6) d'asservissement de chaleur comporte un moyen (7, 8, 12) pour former un signal ($V_{chauff}$) d'erreur entre le signal présent dans l'élément (3) de mesure et un signal correspondant (V1) de consigne constante prescrite, le correcteur (14) étant prévu pour appliquer à l'élément (3) de mesure par l'intermédiaire du premier moyen (17) de couplage un signal alternatif (S1) fonction du signal ($V_{chauff}$) d'erreur.

7. Bolomètre suivant la revendication 6, **caractérisé en ce que** le correcteur (14) est prévu pour appliquer à l'élément (3) de mesure par l'intermédiaire du premier moyen (17) de couplage un signal alternatif (S1) modulé en amplitude par le signal ($V_{chauff}$) d'erreur.

8. Bolomètre suivant la revendication 6 ou 7, **caractérisé en ce que** le correcteur (14) est prévu pour appliquer à l'élément (3) de mesure par l'intermédiaire du premier moyen (17) de couplage un premier signal sinusoïdal (S1) modulé en amplitude par le signal ($V_{chauff}$) d'erreur.

9. Bolomètre suivant l'une quelconque des revendications 6 à 8, **caractérisé en ce que** le correcteur (14) comporte un moyen (20) de linéarisation de la composante fréquentielle (S1) de la puissance de chauffage en fonction du signal d'erreur ($V_{chauff}$).

10. Bolomètre suivant la revendications 9, **caractérisé en ce que** le moyen (20) de linéarisation du correcteur (14) comporte un moyen (148) de modulation en largeur d'impulsions du signal ($V_{chauff}$) d'erreur pour former un signal intermédiaire (S3) et un moyen de modulation du signal intermédiaire (S3) par un deuxième signal sinusoïdal (S2) pour former un premier signal sinusoïdal (S1) appliqué à l'élément (3) de mesure par l'intermédiaire au moins du premier moyen (17) de couplage.

11. Bolomètre suivant la revendication 10, **caractérisé en ce que** le correcteur (14) comporte un moyen (147) de conversion analogique - numérique pour la conversion du signal ($V_{chauff}$) analogique d'erreur en un signal (S10) numérique, le moyen (148) de modulation en largeur d'impulsions du signal ($V_{chauff}$) d'erreur comporte un correcteur de type proportionnel et intégral du signal numérique (S10) pour former le signal intermédiaire (S3).

12. Bolomètre suivant la revendications 9, **caractérisé en ce que** le moyen (20) de linéarisation du correcteur (14) comporte un moyen (148) de formation de la racine carrée du signal ($V_{chauff}$) d'erreur ou d'un signal proportionnel au signal ($V_{chauff}$) d'erreur pour former un signal intermédiaire (144) et un moyen (141, 143) de modulation du signal intermédiaire (144) par un signal sinusoïdal (S2) pour former le signal alternatif (S1).

13. Bolomètre suivant l'une quelconque des revendications 6 à 12, **caractérisé en ce que** le moyen (7, 8, 12) de formation du signal ($V_{chauff}$) d'erreur est numérique.

14. Bolomètre suivant l'une quelconque des revendications précédentes, **caractérisé en ce que** la résistance (R) de mesure est constituée en manganite.

**Claims**

1. A bolometer, including an outer surface (2) for heat absorption of incident radiation, the absorption surface being in a thermal contact with at least one element (3) for measuring the incident radiation, having an electric measurement resistor (R), variable as a function of temperature, the measurement element (3) being located in a heat feedback control loop (6) including a corrector (14) for applying heating power to a resistive heating means for maintaining the temperature of the electric measurement resistor equal to a setpoint temperature ($T_{ref}$), **characterized in that** the resistive heating means comprises the measurement element (3), the corrector (14) is provided for generating a frequency component (S1) of the heating power, which is applied to a first coupling means (17) provided between the measurement element (3) and the corrector (14) in order to apply to the measurement element (3) a signal without any DC component, a second coupling means (19), distinct from the first coupling means (19), is provided between the measurement element (3) and a continuous biasing means (18) for maintaining the electric measurement resistor at a prescribed continuous operation point.

2. The bolometer according to claim 1, **characterized in that** the resistive heating means is formed by the measurement element (3).

3. The bolometer according to any of the preceding claims, **characterized in that** the first coupling means (17) is capacitive.

4. The bolometer according to any of the preceding claims, **characterized in that** the heat feedback control loop (6) and the continuous biasing means (18) are provided in order to change the power dissipated in the measurement resistor (R) without changing its operation point.

5. The bolometer according to any of the preceding claims, **characterized in that** the first coupling means (17) applies a signal in a frequency band above 20 kHz to the measurement element (3).

6. The bolometer according to any of the preceding claims, **characterized in that** the heat feedback control loop (6) includes a means (7, 8, 12) for forming an error signal ($V_{chauff}$) between the signal present in the measurement element (3) and a corresponding signal (V1) with a prescribed constant setpoint value, the corrector (14) being provided for applying to the measurement element (3) via the first coupling means (17) an alternating signal (S1) depending on the error signal ($V_{chauff}$) .

7. The bolometer according to claim 6, **characterized in that** the corrector (14) is provided for applying to the measurement element (3) via the first coupling means (17) an alternating signal (S1) amplitude-modulated by the error signal ($V_{chauff}$).

8. The bolometer according to claim 6 or 7, **characterized in that** the corrector (14) is provided for applying to the measurement element (3) via the first coupling means (17) a first sinusoidal signal (S1) amplitude-modulated by the error signal ($V_{chauff}$).

9. The bolometer according to any of claims 6 to 8, **characterized in that** the corrector (14) includes a means (20) for linearizing the frequency component (S1) of the heating power as a function of the error signal ($V_{chauff}$).

10. The bolometer according to claim 9, **characterized in that** the linearization means (20) of the corrector (14) includes a means (148) for pulse-width modulation of the error signal ($V_{chauff}$) in order to form an intermediate signal (S3) and a means for modulating the intermediate signal (S3) with a second sinusoidal signal (S2) in order to form a first sinusoidal signal (S1) applied to the measurement element (3) via at least the first coupling means (17).

11. The bolometer according to claim 10, **characterized in that** the corrector (14) includes an analog/digital conversion means (147) for converting the analog error signal ($V_{chauff}$) into a digital signal (S10), the means (148) for pulse-width modulation of the error signal ($V_{chauff}$) includes a corrector of the proportional and integral type for the digital signal (S10) in order to form the intermediate signal (S3).

12. The bolometer according to claim 9, **characterized in that** the linearization means (20) of the corrector (14) includes a means (148) for forming the square root of the error signal ($V_{chauff}$) or a signal proportional to the error signal ($V_{chauff}$) in order to form an intermediate signal (144) and a means (141, 143) for modulating the intermediate signal (144) with a sinusoidal signal (S2) in order to form the alternating signal (S1).

13. The bolometer according to any of claims 6 to 12, **characterized in that** the means (7, 8, 12) for forming the error signal ($V_{chauff}$) is digital.

14. The bolometer according to any of the preceding claims, **characterized in that** the measurement resistor (R) consists of manganite.

**Patentansprüche**

1. Bolometer umfassend eine äußere Fläche (2) zur thermischen Absorption einer einfallenden Strahlung, wobei die Absorptionsfläche in thermischem Kontakt mit wenigstens einem Element (3) zur Messung der einfallenden Strahlung ist, das einen elektrischen Messwiderstand (R) aufweist, der in Abhängigkeit der Temperatur variabel ist, wobei das Messelement (3) sich in einem Wärmeregelkreis (6) befindet, der einen Regler (14) zum Anlegen einer Wärmeleistung an ein Wärmewiderstandsmittel umfasst, um die Temperatur des elektrischen Messwiderstands gleich einer Solltemperatur (Tref) zu halten, **dadurch gekennzeichnet, dass** das Wärmewiderstandsmittel das Messelement (3) umfasst, der Regler (14) vorgesehen ist, um eine Frequenzkomponente (S1) der Wärmeleistung zu erzeugen, die an ein erstes Kopplungsmittel (17) angelegt ist, das zwischen dem Messelement (3) und dem Regler (14) vorgesehen ist, um an dem Messelement (3) ein Signal ohne kontinuierliche Komponente anzulegen, ein zweites Kopplungsmittel (19), das vom ersten Kopplungsmittel (19) verschieden ist, zwischen dem Messelement (3) und einem Mittel zur kontinuierlichen Polarisation (18) vorgesehen ist, um den elektrischen Messwiderstand auf einem vorgeschriebenen kontinuierlichen Arbeitspunkt zu halten.

2. Bolometer gemäß Anspruch 1, **dadurch gekennzeichnet, dass** das Wärmewiderstandsmittel von dem Messelement (3) gebildet ist.

3. Bolometer gemäß einem der vorhergehenden Ansprüche, **dadurch gekennzeichnet, dass** das erste Kopplungsmittel (17) kapazitiv ist.

4. Bolometer gemäß einem der vorhergehenden Ansprüche, **dadurch gekennzeichnet, dass** der Wärmeregelkreis (6) und das Mittel zur kontinuierlichen Polarisation (18) vorgesehen sind, um die im Messwiderstand (R) in Wärme umgesetzte Leistung zu verändern, ohne seinen Arbeitspunkt zu ändern.

5. Bolometer gemäß einem der vorhergehenden Ansprüche, **dadurch gekennzeichnet, dass** das erste Kopplungsmittel (17) an das Messelement (3) ein Signal in einem Frequenzband größer als 20 kHz anlegt.

6. Bolometer gemäß einem der vorhergehenden Ansprüche, **dadurch gekennzeichnet, dass** der Wärmeregelkreis (6) ein Mittel (7, 8, 12) umfasst, um ein Fehlersignal ($V_{chauff}$) zwischen dem im Messelement (3) vorliegenden Signal und einem entsprechenden vorgeschriebenen, konstanten Soll-Signal (V1) zu bilden, wobei der Regler (14) vorgesehen ist, um an das Messelement (3) mittels des ersten Kopplungsmittels (17) ein alternierendes Signal (S1) in Abhängigkeit des Fehlersignals ($V_{chauff}$) anzulegen.

7. Bolometer gemäß Anspruch 6, **dadurch gekennzeichnet, dass** der Regler (14) vorgesehen ist, um an das Messelement (3) mittels des ersten Kopplungselements (17) ein alternierendes Signal (S1) anzulegen, das von dem Fehlersignal ($V_{chauff}$) amplitudenmoduliert ist.

8. Bolometer gemäß Anspruch 6 oder 7, **dadurch gekennzeichnet, dass** der Regler (14) vorgesehen ist, um an das Messelement (3) mittels des ersten Kopplungsmittels (17) ein erstes sinusförmiges Signal (S1) anzulegen, das von dem Fehlersignal ($V_{chauff}$) amplitudenmoduliert ist.

9. Bolometer gemäß einem der Ansprüche 6 bis 8, **dadurch gekennzeichnet, dass** der Regler (14) ein Mittel (20) zur Linearisierung der Frequenzkomponente (S1) der Wärmeleistung in Abhängigkeit des Fehlersignals ($V_{chauff}$) umfasst.

10. Bolometer gemäß Anspruch 9, **dadurch gekennzeichnet, dass** das Mittel zur Linearisierung des Reglers (14) ein Mittel (148) zur Pulsweitenmodulation des Fehlersignals ($V_{chauff}$) umfasst, um ein Zwischensignal (S3) und ein Mittel zur Modulation des Zwischensignals (S3) durch ein zweites sinusförmiges Signal (S2) zu bilden, um ein erstes sinusförmiges Signal (S1) zu bilden, das an das Messelement (3) mittels wenigstens des ersten Kopplungsmittels (17) angelegt ist.

11. Bolometer gemäß Anspruch 10, **dadurch gekennzeichnet, dass** der Regler (14) ein Mittel (147) zur analog - numerischen Umwandlung umfasst zur Umwandlung des analogen Fehlersignals ($V_{chauff}$) in ein numerisches Signal (S10), wobei das Mittel (148) zur Pulsweitenmodulation des Fehlersignals ($V_{chauff}$) einen Proportional-Integral-Regler des numerischen Signals (S10) umfasst, um das Zwischensignal (S3) zu bilden.

12. Bolometer gemäß Anspruch 9, **dadurch gekennzeichnet, dass** das Mittel (20) zur Linearisierung des Reglers (14) ein Mittel (148) zur Bildung der Quadratwurzel des Fehlersignals ($V_{chauff}$) oder eines Signals, das proportional zum Fehlersignal ($V_{chauff}$) ist, umfasst, um ein Zwischensignal (144) zu bilden und ein Mittel (141, 143) zur Modulation des Zwischensignals (144) durch ein sinusförmiges Signal (S2), um das alternierende Signal (S1) zu bilden.

13. Bolometer gemäß einem der Ansprüche 6 bis 12, **dadurch gekennzeichnet, dass** das Mittel (7, 8, 12) zur Bildung des Fehlersignals ($V_{chauff}$) numerisch ist.

14. Bolometer gemäß einem der vorhergehenden Ansprüche, **dadurch gekennzeichnet, dass** der Messwiderstand (R) aus Manganit gebildet ist.

# FIG. 1

# FIG. 2

## FIG. 3

**FIG. 5**

**FIG. 4**

FIG. 6

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- GB 2207501 A

**Littérature non-brevet citée dans la description**

- A room temperature Si3N4/SiO2 membrane-type electrical substitution radiometer using thin film paltinum thermometers. **G Allègre ; B Guillet ; D Robbes ; L Méchin ; S Lebargy ; S Nicoletti.** Measurement Science and Technology. Institute of Physics Publishing, 2006, vol. 17, 1-7